# EUROPEAN PATENT APPLICATION

(11) **EP 1 333 558 A2**
(43) Date of publication of application: **06.08.2003**
(21) Application number: 03002098.6
(22) Date of filing: 30.01.2003
(51) Int. Cl.: H02K 1/27

(54) **Rotor for rotating electric machine and method of fabricating the same, for gas turbine power plant**

(30) Priority: 31.01.2002 JP 2002023230
(71) Applicant: Hitachi, Ltd., Chiyoda-ku, Tokyo 101-8010 (JP)
(72) Inventor: Komura, Akiyoshi, Hitachi-shi, Ibaraki 317-0077 (JP); Takahashi, Miyoshi, Hitachi-shi, Ibaraki 316-0001 (JP); Ide, Kazumasa, Hitachiohta-shi, Ibaraki 313-0049 (JP); Kimura, Mamoru, Hitachi-shi, Ibaraki 316-0036 (JP); Mori, Takanobu, Hitachi-shi, Ibaraki 319-1411 (JP); Yamaguchi, Kiyoshi, Mito-shi, Ibaraki 310-0852 (JP); Matsunobu, Takashi, Hitachinaka-shi, Ibaraki 312-0002 (JP)
(74) Representative: Beetz & Partner Patentanwälte

(57) **Abstract**

A rotor for a rotating electric machine comprises a shaft (1), a cylindrical permanent magnet (2) put on the shaft, and a holding ring (3, 3a, 3b) fixedly put on the permanent magnet. The permanent magnet is magnetized by Halbach magnetization, and the holding ring is formed by circumferentially alternately arranging nonmagnetic segments (3a) of a nonmagnetic material and magnetic segments (3b) of a magnetic material. Another rotor for a rotating electric machine comprises a solid, cylindrical permanent magnet (2a), and a cylindrical holding ring put on the permanent magnet, wherein the permanent magnet is magnetized by Halbach magnetization, and the holding ring is formed by circumferentially alternately arranging nonmagnetic segments of a nonmagnetic material and magnetic segments of a magnetic material. A rotating electric machine is provided with one of the foregoing rotors, and a gas turbine power plant is equipped with a rotating electric machine including one of the foregoing rotors. A rotor capable of reducing stator core loss and vibrations when rotated, of providing high output and of being formed in a small size for a rotating electric machine, a method of fabricating the rotor, a rotating electric machine, and a gas turbine power plant are provided.

## Description

### BACKGROUND OF THE INVENTION

The present invention relates to a novel rotor provided with permanent magnets for a rotating electric machine, a method of fabricating the rotor, a rotating electric machine, and a gas turbine power plant.

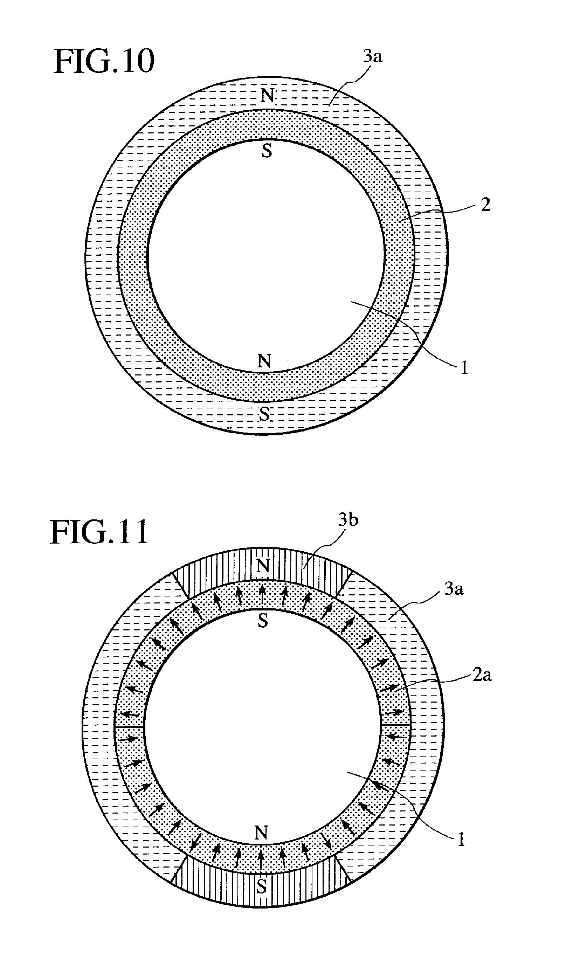

Fig. 10 is a sectional view of a prior art rotor (prior art example 1) for a rotating electric machine. This prior art rotor has a shaft 1, an annular permanent magnet 2 put on the shaft 1, and a holding ring 3a fixedly put on the permanent magnet 2 by shrinkage fit or press fit. The annular permanent magnet 2 is a monolithic, hollow, cylindrical member, or a hollow cylindrical member formed by assembling a plurality of permanent magnets. The holding ring 3a prevents the fracturing and scattering of the annular permanent magnet 2 by centrifugal force. Usually, the holding ring is formed of nonmagnetic material, such as a nickel-base alloy, a titanium alloy or a carbon-fiber-reinforced plastic (CFRP).

Fig. 11 is a sectional view of a prior art rotor (prior art example 2) disclosed in Japanese Patent Laid-open No. 10-23695 for a rotating electric machine. This prior art example 2 is provided with a radially magnetized permanent magnet 2b, and a holding ring formed by assembling nonmagnetic segments 3a and magnetic segments 3b.

When the rotor in the prior art example 1 shown in Fig. 10 is used, the magnetic gap between the permanent magnet 2b and a stator, not shown, increases by a value corresponding to the thickness of the holding ring 3a, which deteriorates an electric characteristic, such as induced voltage in stator coils or output of a generator.

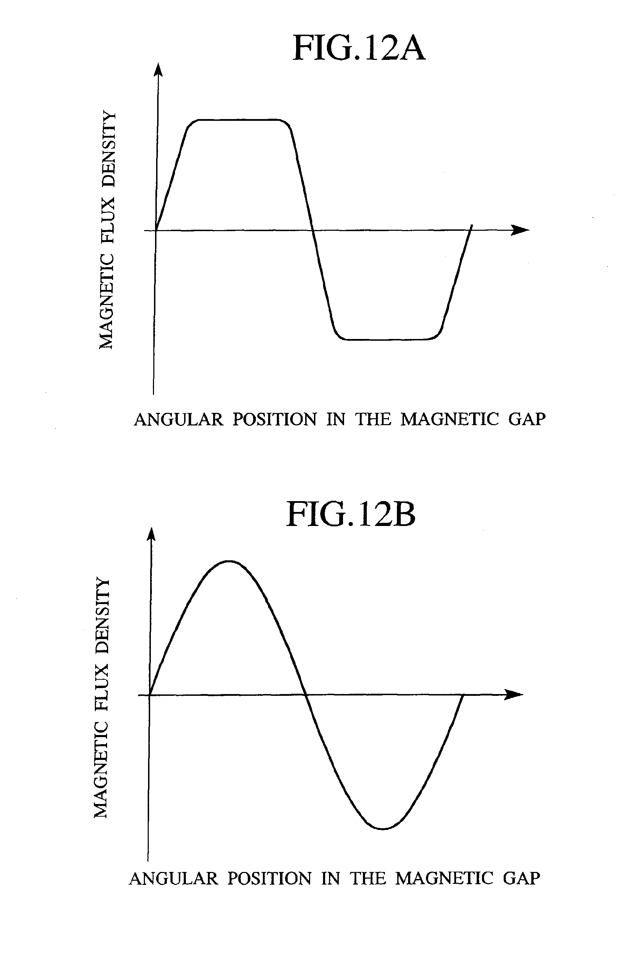

The rotor in the prior art example 2 is provided with the holding ring formed by assembling the nonmagnetic segments 3a and the magnetic segments 3b to solve the problem in the prior art example 1. A narrow magnetic gap is formed in regions corresponding to the magnetic segments 3b, which is effective in preventing the deterioration of the electric characteristic. However, since the permanent magnet 2b of the prior art example 2 is radially magnetized, magnetic flux density is distributed in the air gap, i.e., the distance between a surface of the rotor and the stator, not the magnetic gap, in a magnetic flux density distribution curve resembling a square wave as shown in Fig. 12A. Since the magnetic flux density distribution curve includes many higher harmonics, stator core loss increases, and vibrations are enhanced when the rotor rotates.

A Halbach magnetization method is used for magnetizing the permanent magnet to create a magnetic field in which magnetic flux density is distributed in the air gap in a magnetic flux density distribution curve resembling a sinusoidal wave as shown in Fig. 12B to solve those problems including the increase of stator core loss and the enhancement of vibrations when the rotor rotates. In the rotor in the prior art example 1 provided with the permanent magnet magnetized by the Halbach magnetization method, the magnetic gap, i.e., the distance between the permanent magnet and the stator, increases by a value corresponding to the thickness of the holding ring of the nonmagnetic material. Thus, the rotor has a defect to cause the deterioration of the electric characteristic, such as induced voltage in stator coils or output of a generator.

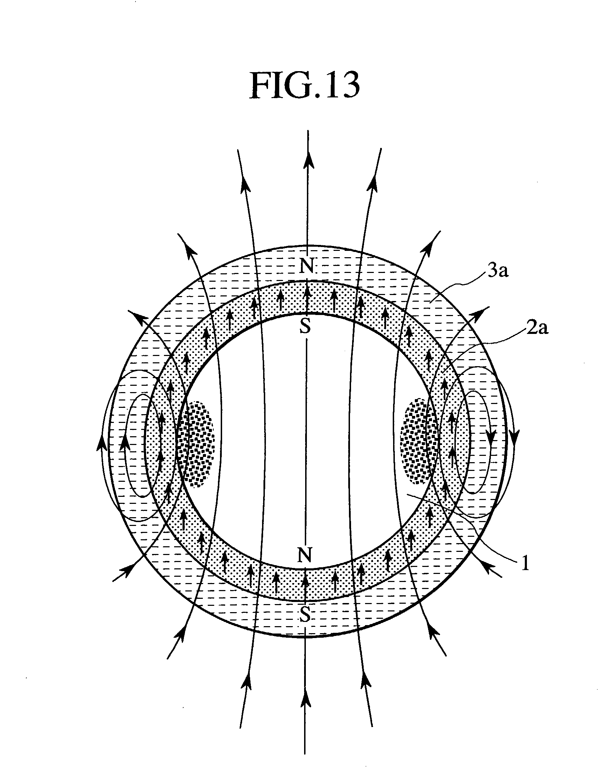

When the permanent magnet magnetized by the Halbach magnetization method is used by the rotor in the prior art example 1, magnetic loop circuits are formed in portions A as shown in Fig. 13, the magnetic flux density of the portions A increases and, in some cases, magnetic saturation occurs. In such a case, the equivalent magnetic resistance of the magnetic circuits increases, which causes the deterioration of the electric characteristic, such as induced voltage in stator coils or output of a generator.

### SUMMARY OF THE INVENTION

Accordingly, it is an object of the present invention to provide a rotor capable of reducing stator core loss and vibrations when rotated, of providing high output and of being formed in a small size for a rotating electric machine, a method of fabricating the rotor, a rotating electric machine, and a gas turbine power plant.

The present invention provides, to solve the foregoing problems, a rotor for a rotating electric machine, including a Halbach magnetized permanent magnet put on a shaft, and a holding ring formed by circumferentially alternately arranging nonmagnetic segments of a nonmagnetic material and magnetic segments of a magnetic material, and fixedly put on the permanent magnet.

Since the rotor including the Halbach magnetized permanent magnet put on the shaft, and the holding ring fixedly put on the permanent magnet and formed by circumferentially arranging the nonmagnetic segments and the magnetic segments is used in a rotating electric machine, magnetic flux density is distributed in a sinusoidal distribution curve. Consequently, the problems including the increase of stator core loss and the enhancement of vibrations generated when the rotor rotates can be solved, the magnetic gap can be reduced in regions corresponding to the magnetic segments of the holding ring, and hence the deterioration of the electric characteristic can be avoided. Since the magnetic segments of the holding ring are highly permeable to magnetic flux, small magnetic loop circuits as shown in Fig. 13 are hardly formed, and magnetic saturation does not occur around the portions A; that is, the equivalent magnetic resistance of the magnetic circuits does no increase, and hence the deterioration of the electric characteristic can be avoided. Consequently, the output of the rotating electric machine increases and the rotating electric machine operates at high efficiency.

According to the present invention, a method of fabricating a rotor for a rotating electric machine, including a shaft, a cylindrical permanent magnet put on the shaft, and a cylindrical holding ring formed by alternately arranging nonmagnetic segments of a nonmagnetic material and magnetic segments of a magnetic material comprises the steps of: orienting and forming the permanent magnet for Halbach magnetization in forming the permanent magnet by sintering; assembling the shaft and the permanent magnet; and fixedly putting the holding ring on the permanent magnet by shrinkage fit or press fit. The permanent magnet is magnetized by Halbach magnetization after assembling the rotor for a rotating electric machine.

According to the present invention, a method of fabricating a rotor for a rotating electric machine, including a shaft, an auxiliary ring put on the shaft, a cylindrical permanent magnet put on the auxiliary ring, and a cylindrical holding ring formed by alternately arranging nonmagnetic segments of a nonmagnetic material and magnetic segments of a magnetic material comprises the steps of: orienting and forming the permanent magnet for Halbach magnetization in forming the permanent magnet by sintering; assembling the shaft, the auxiliary ring and the permanent magnet; and fixedly fitting the shaft in the auxiliary ring by cooling fit or press fit. The permanent magnet is magnetized by Halbach magnetization after assembling the rotor for a rotating electric machine.

According to the present invention, a rotating electric machine includes the rotor fabricated by one of the foregoing methods according to the present invention.

According to the present invention, a gas turbine power plant comprises: a gas turbine, and a generator driven by the gas turbine; wherein the generator is the foregoing rotating electric machine according to the present invention. The present invention is effectively applied to a gas turbine power plant in which the rotor of the generator has a diameter in the range of 50 to 300 mm, and is driven for rotation at a high rotating speed in the range of 20,000 to 100,000 rpm.

Although it is preferable that the permanent magnet is a monolithic, hollow or solid, cylindrical magnet, the permanent magnet may be a sectional magnet formed by successively bonding together a plurality of magnets with an adhesive or the like.

### BRIEF DESCRIPTION OF THE DRAWINGS

Other objects and advantages of the invention will become apparent from the following description of embodiments with reference to the accompanying drawings in which:
Fig. 1 is sectional view of a rotor in a first embodiment according to the present invention for a rotating electric machine;
Fig. 2 is a schematic longitudinal sectional view of the rotor shown in Fig. 1;
Fig. 3 is a sectional view of the rotor shown in Fig. 1, showing magnetic lines of force;
Fig. 4 is a sectional view of a rotating electric machine according to the present invention provided with the rotor shown in Fig. 1;
Fig. 5 is a sectional view of a rotor in a second embodiment according to the present invention for a rotating electric machine;
Fig. 6 is a sectional view of a rotor in a third embodiment according to the present invention for a rotating electric machine;
Fig. 7 is a sectional view of a rotor in a fourth embodiment according to the present invention for a rotating electric machine;
Fig. 8 is a sectional view of a rotor in a fifth embodiment according to the present invention for a rotating electric machine;
Fig. 9 is a diagrammatic view of a gas turbine power plant in a sixth embodiment according to the present invention equipped with a rotating electric machine according to the present invention;
Fig. 10 is a sectional view of a prior art rotor for a rotating electric machine;
Fig. 11 is a sectional view of another prior art rotor for a rotating electric machine;
Figs. 12A and 12B are diagrams showing the distribution of magnetic flux density in an air gap; and
Fig. 13 is a sectional view showing magnetic lines of force around the rotor for a rotating electric machine.

### DESCRIPTION OF THE PREFERRED EMBODIMENTS

### First Embodiment

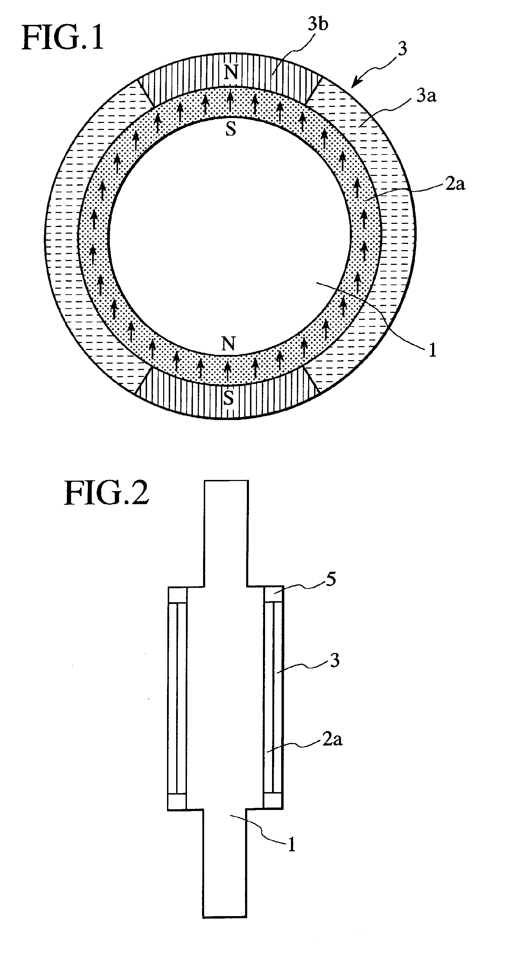

Fig. 1 is a sectional view of a two-pole rotor in a first embodiment according to the present invention for a rotating electric machine, in which the arrows indicate the direction of magnetization. The rotor includes a shaft 1 playing a role of a center shaft, a cylindrical permanent magnet 2a put on the shaft 1, and a cylindrical holding ring 3. The permanent magnet 2a is magnetized by Halbach magnetization such that magnetic flux density is distributed in a sinusoidal waveform as shown in Fig. 12B. The holding ring 3 is formed by alternately arranging nonmagnetic segments 3a of a nonmagnetic material and magnetic segments 3b of a magnetic material. Since this rotor creates a magnetic field in which the magnetic flux density is distributed in a sinusoidal waveform in an air gap, the aforesaid problems including the increase of stator core loss and the enhancement of vibrations when the rotor rotates can be solved. Since the gap size of portions of the magnetic gap corresponding to the magnetic segments 3b is reduced, the deterioration of electric characteristic can be avoided. Since the magnetic segments 3b of the holding ring 3 are permeable to magnetic flux, the small magnetic loop circuit as shown in Fig. 13 are hardly formed and magnetic saturation does not occur around the portions A. The equivalent magnetic resistance of the magnetic circuits does not increase, and hence the deterioration of the electric characteristic can be prevented. Consequently, the output of the rotating electric machine increases and the rotating electric machine operates at high efficiency.

The rotor for a rotating electric machine is fabricated by assembling the shaft and the permanent magnet, and fixedly putting the holding ring formed by alternately arranging the nonmagnetic segments 3a and the magnetic segments 3b on the permanent magnet by shrinkage fit or press fit. The permanent magnet is magnetized by Halbach magnetization after assembling the rotor for a rotating electric machine.

Although the shaft 1 of the rotor in the first embodiment is a sold, round shaft, a hollow, tubular shaft may be used instead of the solid, round shaft for the same effect.

Referring to Fig. 2 showing the rotor shown in Fig. 1 in a longitudinal sectional view, the cylindrical permanent magnet 2a is mounted on a body part of the shaft 1, and the cylindrical holding ring 3 put on the permanent magnet 2a. Stop rings 5 are put on the opposite ends of the body part of the shaft 1 to hold the permanent magnet 2a and the holding ring 3 in place on the shaft 1. Shaft parts extend from the opposite ends of the body part of the shaft 1, respectively. The shaft 1 may be formed of either a magnetic material, such as a low alloy steel, or a nonmagnetic material, such as a Ni-base alloy.

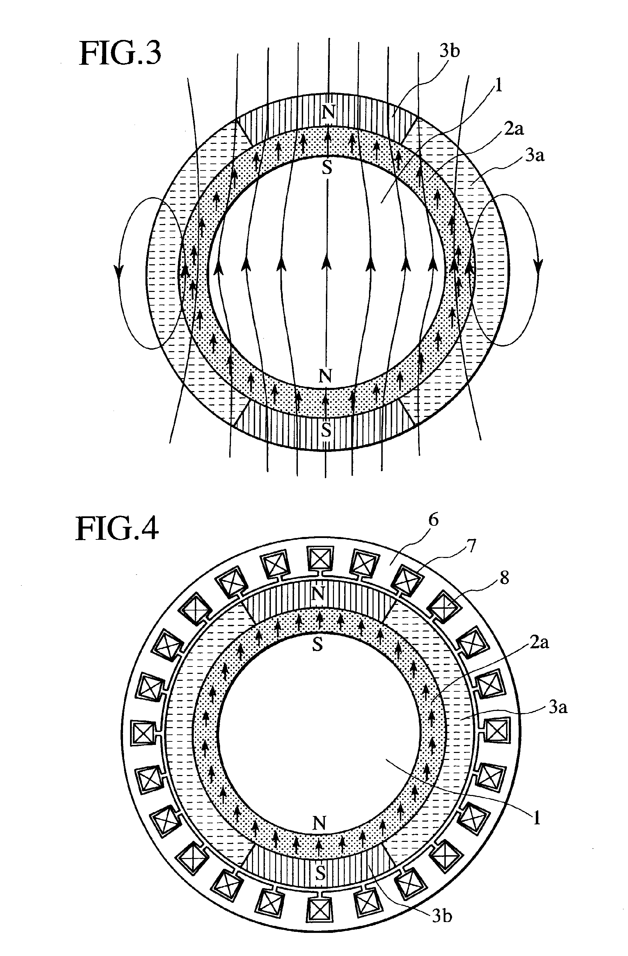

Referring to Fig. 3 showing magnetic lines of force in a magnetic field created by the rotor provided with the permanent magnet magnetized by Halbach magnetization, the magnetic lines of force are concentrated on the magnetic segments 3b and, therefore, portions like the portions A shown in Fig. 3 in which magnetic flux density is high are not formed.

Referring to Fig. 4 showing a rotating electric machine provided with the rotor in the first embodiment, a stator has a stator core 6 formed by stacking silicon steel plates and provided with slots 7, stator windings 8 wound in the slots 7. The electric machine has also a case and bearings held on the opposite ends of the case, which are not shown in Fig. 4.

It is possible that a tensile stress a little less than 1,000 MPa at a maximum is induced in the holding ring 3 of the rotor in the first embodiment when, for example, the rotor has a diameter of 100 mm and rotates at a rotating speed of 50,000 rpm. Therefore, the material forming the holding ring 3 and the joints of the nonmagnetic segments 3a and the magnetic segments 3b must have a tensile strength greater than 1,000 MPa. Therefore, diffusion bonding may be an effective bonding method of bonding the nonmagnetic segments 3a and the magnetic segments 3b. The nonmagnetic segment 3a and the magnetic segment 3b of the holding ring 3 are joined together by a joining procedure including the steps of a diffusion bonding process, a solution treatment and an aging treatment. It is important that heating conditions suitable for the solution treatment and the aging treatment of the nonmagnetic material and those suitable for the solution treatment and the aging treatment of the magnetic material are substantially the same. If the heating conditions suitable for the nonmagnetic material and those suitable for the magnetic material are different considerably from each other, the nonmagnetic segments 3a and the magnetic segments 3b cannot be simultaneously heat-treated, and the respective strengths of portions, around the joints, of the nonmagnetic segments 3a and the magnetic segments 3b are reduced because those portions are affected adversely by those different heating conditions unsuitable for them. Therefore, the magnetic material and the nonmagnetic material must be selected such that heat treatment conditions suitable for treating the nonmagnetic material and those suitable for treating the magnetic material are substantially the same. Suitable magnetic materials include maraging steels, stainless steels and die steels. Suitable nonmagnetic materials include Ni-base alloys and titanium alloys. It is particularly preferable to form the nonmagnetic segments 3a of a titanium alloy and to form the magnetic segments 3b of a maraging steel. The cylindrical permanent magnet 2a is formed by sintering a mass of an intermetallic compound containing a rare earth element, such as NdFeB or SmCo.

When the nonmagnetic segments 3a and the magnetic segments 3b are bonded together with an adhesive, the nonmagnetic segments 3a and the magnetic segments 3b can be individually processed by the solution treatment and the aging treatment, and the thus treated nonmagnetic segments 3a and the magnetic segments 3b can be bonded together. Therefore the difference in heat treatment conditions between the nonmagnetic segments 3a and the magnetic segments 3b is not a problem.

The holding ring may be formed of a composite magnetic material that permits formation of local nonmagnetic sections in the holding ring to avoid the foregoing problem in bonding together the nonmagnetic segments 3a and the magnetic segments 3b. For example, a ferrite stainless composite material exhibits ferromagnetism when heated at temperatures not higher than the ferrite-phase (α-phase) temperature and becomes nonmagnetic when treated by a solution treatment at a temperature not lower than the austenite-phase (γ-phase) temperature and quenched. When the holding ring 3 is formed of such a composite magnetic material, the holding ring is free from problems that arises in joining together the nonmagnetic segments 3a and the magnetic segments 3b, and it is unnecessary to worry about the reduction of the strength of the joints due to defects and such.

### Second Embodiment

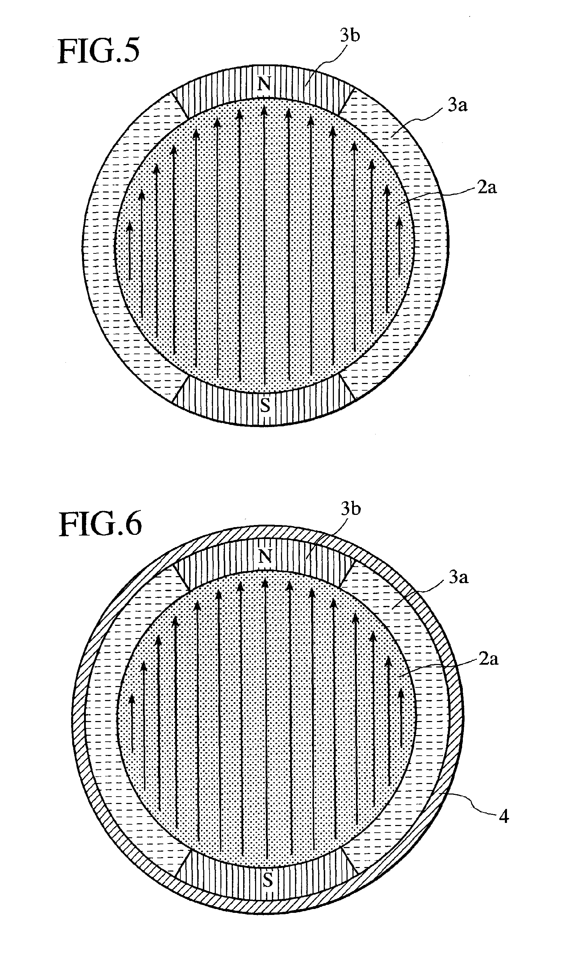

Fig. 5 shows a two-pole rotor in a second embodiment according to the present invention for a rotating electric machine. This rotor includes a solid, cylindrical permanent magnet 2a, and a cylindrical holding ring put on the permanent magnet 2a. The permanent magnet 2a is magnetized by Halbach magnetization. The holding ring is formed by alternately arranging nonmagnetic segments 3a of a nonmagnetic material and magnetic segments 3b of a magnetic material. Since this rotor, similarly to the rotor in the first embodiment, creates a magnetic field in which the magnetic flux density is distributed in a sinusoidal waveform in an air gap, the aforesaid problems including the increase of stator core loss and the enhancement of vibrations when the rotor rotates can be solved. Since the gap size of portions of the magnetic gap corresponding to the magnetic segments 3b is reduced, the deterioration of electric characteristic can be avoided. Consequently, the output of the rotating electric machine increases and the rotating electric machine operates at high efficiency. Materials, method of fabrication and method of magnetization relating to the rotor in the second embodiment are the same as those relating to the rotor in the first embodiment. As shown in Fig. 5, lines of magnetic flux in the magnetic field created by the permanent magnet 2a extend in a direction perpendicular to the axis of the shaft 1.

### Third Embodiment

Fig. 6 shows a two-pole rotor in a third embodiment according to the present invention for a rotating electric machine. This rotor includes a solid, cylindrical permanent magnet 2a, a cylindrical holding ring put on the permanent magnet 2a, and a nonmagnetic auxiliary ring 4 put on the holding ring. The holding ring is formed by alternately arranging nonmagnetic segments 3a of a nonmagnetic material and magnetic segments 3b of a magnetic material. Even if defects are formed in the joints of the nonmagnetic segments 3a and the magnetic segments 3b, and the nonmagnetic segments 3a and the magnetic segments 3b are disconnected from each other, the component parts of the rotor are restrained from scattering by the auxiliary ring 4 to ensure the safety of the surroundings of the rotor. Preferable nonmagnetic materials for forming the auxiliary ring 4 include Ni-base alloys, titanium alloys, and carbon-fiber-reinforced plastic. The construction of the rotor is the same as that of the rotor in the first embodiment, and the construction of a rotating electric machine provided with the rotor in the third embodiment is the same as that of the rotating electric machine provided with the rotor in the first embodiment.

The rotor in the third embodiment is fabricated by assembling the auxiliary ring 4, the permanent magnet 2a, and the holding ring, and fitting the shaft in the auxiliary ring 4 by press fit or cooling fit. The permanent magnet 2a is magnetized by Halbach magnetization after the rotor has been assembled.

Materials, method of fabrication, and method of magnetization relating to the rotor in the third embodiment excluding the auxiliary ring 4 are the same as those relating to the rotor in the first embodiment. As shown in Fig. 6, lines of magnetic flux in the magnetic field created by the permanent magnet 2a extend in a direction perpendicular to the axis of the shaft 1.

### Fourth Embodiment

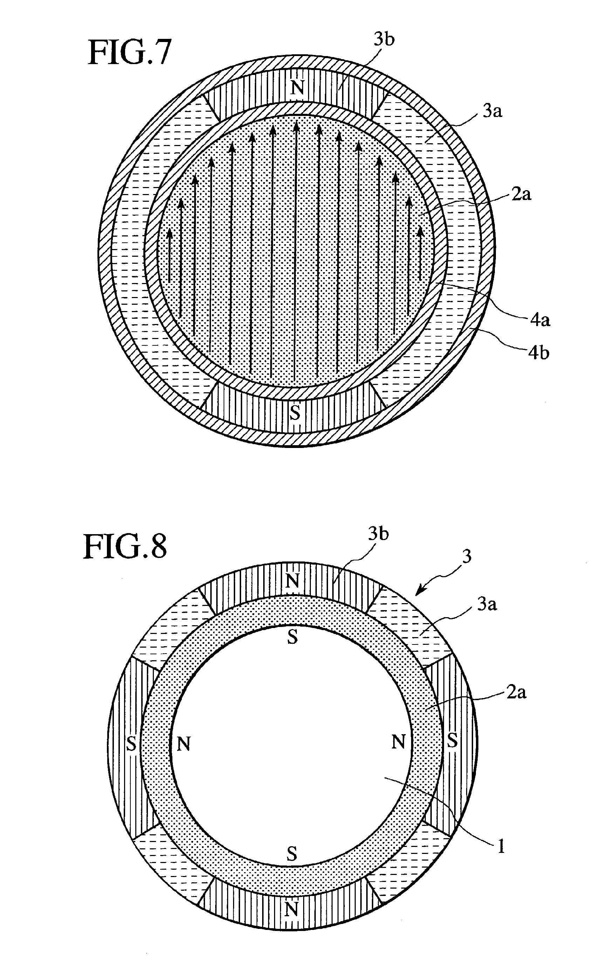

Fig. 7 shows a two-pole rotor in a fourth embodiment according to the present invention for a rotating electric machine. This rotor includes a solid, cylindrical permanent magnet 2a, an inner nonmagnetic auxiliary ring 4 put on the permanent magnet 2a, a holding ring put on the inner auxiliary ring 4a, and an outer nonmagnetic auxiliary ring 4b put on the holding ring. The holding ring is formed by alternately arranging the nonmagnetic segments 3a and the magnetic segments 3b. The holding ring and the inner and outer auxiliary rings 4a, 4b can be combined in a single member. The auxiliary rings 4a, 4b reinforce the holding ring. Thus, the assembly of the holding ring and the auxiliary rings 4a, 4b has a strength higher than that of the holding ring. Even if defects are formed in the joints of the nonmagnetic segments 3a and the magnetic segments 3b, and the nonmagnetic segments 3a and the magnetic segments 3b are disconnected from each other, the component parts of the rotor are restrained from scattering by the auxiliary rings 4a, 4b to ensure the safety of the surroundings of the rotor. Preferable nonmagnetic materials for forming the auxiliary rings 4a, 4b include Ni-base alloys, titanium alloys, carbon-fiber-reinforced plastic.

The rotor in the fourth embodiment is fabricated by assembling the permanent magnet 2a and the shaft, and putting an annular member formed by putting the inner auxiliary ring 4a on and fitting the outer auxiliary ring 4b in the holding ring formed by alternately arranging the nonmagnetic segments 3a and the magnetic segments 3b on the assembly of the permanent magnet 2a and the shaft by press fit or shrinkage fit. The permanent magnet 2a is magnetized by Halbach magnetization after the completion of the rotor.

Materials relating to the rotor in the fourth embodiment excluding the auxiliary rings 4a, 4b are the same as those relating to the rotor in the first embodiment. As shown in Fig. 7, lines of magnetic flux in the magnetic field created by the permanent magnet 2a extend in a direction perpendicular to the axis of the shaft 1.

### Fifth Embodiment

Fig. 8 shows a four-pole rotor in a fifth embodiment according to the present invention for a rotating electric machine. The rotor in the fifth embodiment is provided with a holding ring 3 formed by alternately arranging four nonmagnetic segments 3a and four magnetic segments 3b.

Materials, method of fabrication and such relating to the rotor in the fifth embodiment are the same as those relating to the rotor in the first embodiment.

In an n-pole rotor, where n is six, eight or such, a holding ring 3 is formed, similarly to the four-pole rotor in the fifth embodiment, by alternately arranging n nonmagnetic segments and n magnetic rings for the same effect.

### Sixth Embodiment

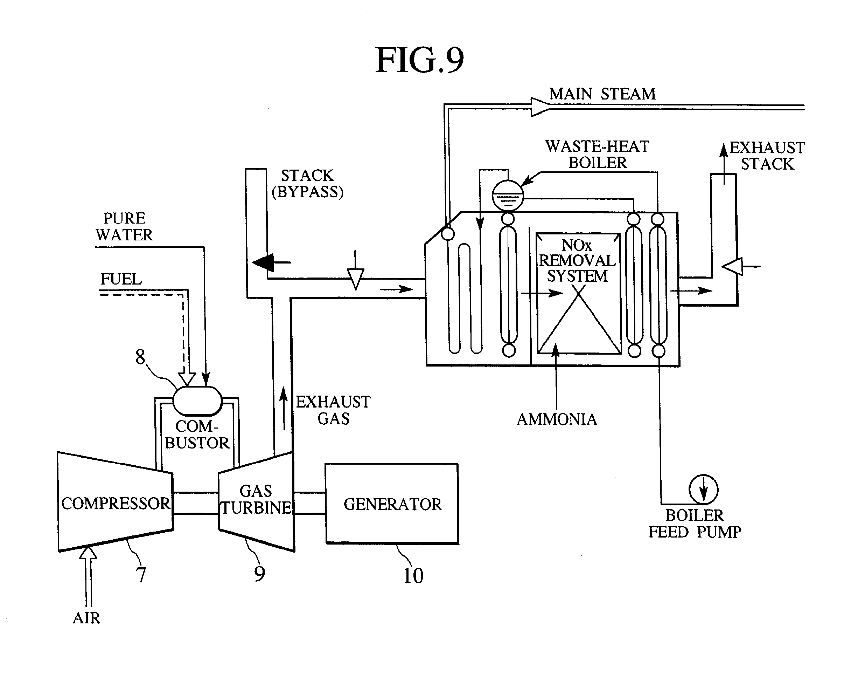

Fig. 9 shows a gas turbine power plant in a sixth embodiment according to the present invention employing the rotor in any one of the first to the fifth embodiment. The gas turbine power plant is equipped with a compressor 7, a combustor 8, a gas turbine 9 and a generator 10. The heat of exhaust from the gas turbine 9 is used for generating steam by a waste-heat boiler, and the steam generated by the waste-heat boiler is used for driving a steam turbine, for heating or such.

The rotor of the present invention for a rotating electric machine is effectively applicable to a high-speed generator that operates at a high operating speed in the range of 20,000 to 100,000 rpm. The rotor reduces stator core loss and vibrations when rotated, enhances the output of the generator and enables forming the generator in a small size.

The rotor of the present invention, for a rotating electric machine, comprising the permanent magnet magnetized by Halbach magnetization, and the holding ring formed by alternately arranging the nonmagnetic segments and the magnetic segments and put on the permanent magnet creates a magnetic field in which magnetic flux density is distributed in a sinusoidal waveform. Thus, the problems including the increase of stator core loss and enhancement of vibration when the rotor rotates can be solved. Since the gap size of portions of the magnetic gap corresponding to the magnetic segments is reduced, the deterioration of electric characteristic can be avoided. Since the magnetic segments of the holding ring are permeable to magnetic flux, small magnetic loop circuits are hardly formed and magnetic saturation does not occur around particular portions of the shaft. The equivalent magnetic resistance of the magnetic circuits does not increase, and hence the deterioration of the electric characteristic can be prevented. Consequently, the output of the rotating electric machine increases and the rotating electric machine operates at high efficiency.

While the invention has been described in its preferred embodiments, it is to be understood that the words which have been used are words of description rather than limitation and that changes within the purview of the appended claims may be made without departing from the true scope and spirit of the invention in its broader aspects.

## Claims

1. A rotor for a rotating electric machine, comprising
a shaft (1);
a cylindrical permanent magnet (2) put on the shaft; and
a cylindrical holding ring (3, 3a, 3b) fixedly put on the permanent magnet;
wherein the permanent magnet is magnetized by Halbach magnetization, and the holding ring is formed by circumferentially alternately arranging nonmagnetic segments (3a) of a nonmagnetic material and magnetic segments (3b) of a magnetic material.

2. A rotor for a rotating electric machine, comprising
a solid, cylindrical permanent magnet (2a); and
a cylindrical holding ring (3, 3a, 3b) put on the permanent magnet;
wherein the permanent magnet is magnetized by Halbach magnetization, and the holding ring is formed by circumferentially alternately arranging nonmagnetic segments (3a) of a nonmagnetic material and magnetic segments (3b) of a magnetic material.

3. The rotor for a rotating electric machine according to claim 1, wherein the permanent magnet is formed by sintering a mass of an intermetallic compound containing a rare earth element.

4. The rotor for a rotating electric machine, according to claim 1, wherein the magnetic material is a maraging steel, a stainless steel or a die steel, and the nonmagnetic material is an Ni-base alloy or a titanium alloy.

5. The rotor for a rotating electric machine, according to claim 1, wherein the holding ring is a hollow cylinder formed by bonding together the nonmagnetic segments and the magnetic segments by diffusion bonding or with an adhesive.

6. The rotor for a rotating electric machine, according to claim 1, wherein the holding ring is formed by locally demagnetizing a ring of a composite magnetic material by a heat treatment.

7. The rotor for a rotating electric machine, according to claim 6, wherein the composite magnetic material is a metastable austenitic stainless steel or a ferritic stainless steel.

8. The rotor for a rotating electric machine, according to claim 1, wherein a cylindrical, nonmagnetic auxiliary ring is put on the holding ring or a cylindrical, nonmagnetic auxiliary ring is put on the holding ring and a cylindrical, nonmagnetic auxiliary ring is fitted in the holding ring.

9. The rotor for a rotating electric machine, according to claim 8, wherein the auxiliary ring or the auxiliary rings are formed of a carbon-fiber-reinforced plastic material, an Ni-base alloy, a titanium alloy or a nonmagnetic stainless steel.

10. A method of fabricating a rotor for a rotating electric machine, including a shaft, a cylindrical permanent magnet put on the shaft, and a cylindrical holding ring formed by circumferentially alternately arranging nonmagnetic segments of a nonmagnetic material and magnetic segments of a magnetic material, said method comprising the steps of:
assembling the shaft and the permanent magnet; and
fixedly putting the holding ring on the permanent magnet by shrinkage fit or press fit.

11. A method of fabricating a rotor for a rotating electric machine, including a shaft, an auxiliary ring put on the shaft, a cylindrical permanent magnet put on the auxiliary ring, and a cylindrical holding ring formed by alternately arranging nonmagnetic segments of a nonmagnetic material and magnetic segments of a magnetic material, said method comprising the steps of:
assembling the auxiliary ring, the permanent magnet and the holding ring; and
fitting the shaft in the auxiliary ring by cooling fit or press fit.

12. A rotating electric machine including a stator (6) provided with slots (7) formed in a core and coils (8) placed in the slots; and a rotor (1-3) supported for rotation in the stator;
wherein the rotor is identical with the rotor stated in claim 1.

13. A gas turbine power plant comprising: a gas turbine (9); and a generator (10) driven by the gas turbine;
wherein the generator is the rotating electric machine stated in claim 12.
